# EUROPÄISCHE PATENTSCHRIFT

(11) **EP 2 782 452 B1**
(45) Veröffentlichungstag und Bekanntmachung des Hinweises auf die Patenterteilung: **02.12.2015**
(21) Anmeldenummer: 13791724.1
(22) Anmeldetag: 09.09.2013
(51) Int. Cl.: A21C 5/04

(54) **AUSWIEGEANORDNUNG ZUM VERSCHIEBEN VON TEIGPORTIONEN**
DIVIDING ASSEMBLY FOR MOVING PORTIONS OF DOUGH
ENSEMBLE DE PESÉE DE PRÉCISION POUR DÉPORTER DES PORTIONS DE PÂTE

(30) Priorität: 13.09.2012 AT 503882012
(43) Veröffentlichungstag der Anmeldung: 01.10.2014
(73) Patentinhaber: König Maschinen Gesellschaft mbH, 8045 Graz (AT)
(72) Erfinder: SAUSENG, Robert, A-8061 St. Radegund (AT); PÖLLABAUER, Johann, A-Wundschuh 8142 (AT)
(74) Vertreter: Wildhack & Jellinek
(86) Internationale Anmeldenummer: PCT/AT2013/050179
(87) Internationale Veröffentlichungsnummer: WO 2014/040106

(56) Entgegenhaltungen:
- EP-A1- 2 174 549
- AT-B- 348 457
- DE-A1- 3 011 863
- US-A- 1 871 261

## Beschreibung

Die Erfindung betrifft eine Auswiegeanordnung zum Transport bzw. Verschieben von Teigportionen mit einem Auswiegeschieber in einer Vorrichtung zum Portionieren und Bearbeiten von Teig gemäß dem Oberbegriff des Patentanspruches 1.

Aus dem Stand der Technik sind Auswiegeschieber bekannt, die über Kniehebelmechanismen mit Federn linear bewegt werden. Der direkt über einen Kniehebelmechanismus von einem Antrieb angesteuerte Auswiegeschieber verschiebt Teigportionen in Richtung einer Auswiegetrommel. Federn des Kniehebelmechanismus bewirken dabei eine konstante Einpresskraft der Teigportionen in die Auswiegetrommel. Bei Änderung des Teiges, der Teigportionen oder der Teigmenge verändern die Federn aufgrund der Federkennlinie und des Federwegs die Einpresskraft des Auswiegeschiebers. Es ist daher nicht möglich, für unterschiedliche Teige und Teigportionen eine gleichbleibende Einpresskraft des Teiges durch den Auswiegeschieber in die Auswiegetrommel zu gewährleisten. Eine Variation der Einpresskraft führt zur Abweichung der Teigmenge in der Auswiegetrommel von der Vorgabe und verändert dabei das Endgewicht des erzeugten Backwerks.

Die DE 30 11 863 A1 offenbart eine Auswiegeanordnung zum Transport bzw. Verschieben von Teigportionen mit einem Auswiegeschieber in einer Vorrichtung zum Portionieren und Bearbeiten von Teig, wobei die Anordnung einen verschwenkbaren Pleuel und einen verschwenkbar gelagerten Schwenkhebel aufweist.

Der Schwenkhebel trägt einen Betätigungsfortsatz zur Hin- und Herbewegung des Auswiegeschiebers und der Pleuel ist von einem Antrieb um sein Schwenklager verschwenkbar.

Aufgabe der Erfindung ist es daher, eine konstante Einpresskraft des Auswiegeschiebers in die Auswiegetrommel, unabhängig von der Auswiegemenge und der Teigbeschaffenheit, zu gewährleisten. Eine weitere Aufgabe ist es, eine einfach aufgebaute und störungsfrei arbeitende Auswiegeanordnung zu erstellen. Die Erfindung löst diese Aufgaben bei einer Auswiegeanordnung der eingangs genannten Art mit den im Kennzeichen des Anspruchs 1 angegebenen Merkmalen. Es ist erfindungsgemäß vorgesehen, dass zwischen dem ersten Schwenkhebel und dem zweiten Schwenkhebel ein Luftbalg angeordnet ist, dessen Volumen und/oder Form durch Druckluftbeaufschlagung veränderlich ist und den Abstand zwischen den einander gegenüberliegenden Hebelarmen der beiden Schwenkhebel vorgibt.

Leerwege können vermieden und dadurch schnellere Arbeitstakte erreicht werden, wenn der erste Schwenkhebel und der zweite Schwenkhebel gegen den Luftbalg anlegbar sind oder zumindest ein Schwenkhebel mit dem Luftbalg verbunden ist.

Um eine konstante Befüllung des Luftbalgs und gleiche Auswiegebedingungen der Teigportionen zu gewährleisten ist es vorteilhaft, wenn der Luftbalg mit einer Druckluftquelle, vorzugsweise einem Druckbehälter oder Kompressor, verbunden ist.

Um den Druck im Luftbalg annähernd konstant zu halten und Druckstöße im Luftbalg durch ein Puffervolumen zu minimieren ist vorgesehen, dass der Luftbalg mit einer Druckluftquelle, vorzugsweise einem als Puffervolumen ausgebildeten Druckbehälter, verbunden ist.

Um den Auswiegeschieber besser auf Veränderungen der Teigmenge und der Teigzusammensetzung anpassen zu können, ist vorgesehen, dass der Luftbalg und/oder die Druckluftquelle eine Druckregeleinheit zur Einstellung des Druckes im Luftbalg und demzufolge des Volumens und/oder der Form des Luftbalges aufweisen.

Eine Platz sparende, exakt arbeitende Ausführungsform der Erfindung sieht vor, dass der erste Schwenkhebel und der zweite Schwenkhebel auf zueinander parallelen Schwenkachsen verschwenkbar gelagert sind oder dass der erste Schwenkhebel und der zweite Schwenkhebel auf derselben Schwenkachse relativ zueinander verschwenkbar gelagert sind.

Eine besondere, einfach aufgebaute Ausführungsform der Erfindung sieht vor, dass zur Verdrehung des ersten Schwenkhebels ein Antrieb und ein Kniehebel vorgesehen sind, wobei der Antrieb einen kurzen Hebel antreibt, der mit einem langen Hebel den Kniehebel ausbildet, wobei das Ende des langen Hebels mit dem ersten Schwenkhebel verbunden ist.

Eine effektive Kraftübertragung vom ersten Schwenkhebel über den Luftbalg zum zweiten Schwenkhebel wird erreicht, wenn der Luftbalg zumindest teilweise in der Bewegungsbahn bzw. -ebene der beiden Schwenkhebel angeordnet ist.

Um eine symmetrische Kraftübertragung vom ersten Schwenkhebel über den Luftbalg auf den zweiten Schwenkhebel zu bewirken und ein Verkippen der Schwenkhebel zu verhindern ist vorgesehen, dass der erste Schwenkhebel zwei Lagerteile, aufweist, mit denen er auf der Schwenkachse gelagert ist und zwischen denen der zweite Schwenkhebel auf der Schwenkachse gelagert ist.

Ein vorteilhaftes Kräfteverhältnis am zweiten Schwenkhebel erreicht die Erfindung, wenn die Länge des mit dem Luftbalg in Kontakt stehenden Hebelarmes des zweiten Schwenkhebels größer ist als die Länge des Betätigungsfortsatzes, vorzugsweise das Zwei- bis Vierfache der Länge des Betätigungsfortsatzes beträgt.

Eine besonders gute Einstellung des Verfahrweges des Auswiegeschiebers wird erreicht, wenn der Fülldruck und das Füllvolumen des Luftbalgs den Öffnungswinkel zwischen dem ersten Schwenkhebel und dem zweiten Schwenkhebel definieren.

Um den Auswiegeschieber effektiv einstellen zu können ist vorgesehen, dass der Öffnungswinkel zwischen den Schwenkhebeln über den Druck im Luftbalg einstellbar und vorgegeben ist.

Eine vorteilhafte Ausführungsform der Erfindung wird erreicht, wenn bei Verschwenken des ersten Schwenkhebels durch den Kniehebel der Luftbalg druckbeaufschlagbar und der zweite Schwenkhebel durch den Luftbalg um die Schwenkachse auslenkbar ist, sodass der mit dem zweiten Schwenkhebel gekoppelte Auswiegeschieber bei einem Verschwenken des ersten Schwenkhebels entlang eines Ausgabekanals verschiebbar ist.

Der erfindungsgemäße Auswiegeschieber arbeitet besonders effektiv, wenn der Luftbalg den Öffnungswinkel zwischen den Schwenkhebeln und die Verdrehung des zweiten Schwenkhebels bestimmt und die Länge des Ausfahrweges des Auswiegeschiebers und gegebenenfalls den Einpressdruck einer Teigportion in eine radiale Aufnahmeöffnung einer Auswiegetrommel vorgibt.

Eine einfache Kraftübertragung des zweiten Schwenkhebels auf den Auswiegeschieber wird erreicht, wenn der Auswiegeschieber eine Ausnehmung aufweist, in die der zweite Schwenkhebel, vorzugsweise mit einer am freien Ende des Betätigungsfortsatzes drehbar gelagerten Rolle, eingreift.

Um ein unnötiges Ausweiten des Luftbalgs zu verhindern und die Rückstellung des zweiten Schwenkhebels zu unterstützen, ist es vorteilhaft, wenn ein Anschlag zur Begrenzung des Öffnungswinkels und der Verhinderung der Überdehnung des Luftbalgs vorgesehen ist, der einen Zapfen und eine damit zusammenwirkende Anschlagfläche aufweist, wobei gegebenenfalls die Anschlagfläche des Anschlags an dem ersten Schwenkhebel und der Zapfen an dem zweiten Schwenkhebel ausgebildet ist.

Erfindungsgemäß ist vorgesehen, dass der Auswiegeschieber in einer Vorrichtung zum Portionieren und Bearbeiten von Teig eingebaut wird.

Eine Ausführungsform der Vorrichtung sieht vor, dass die Vorrichtung einen Antrieb zur Betätigung des ersten Schwenkhebels aufweist und/oder dass an die Ausgangsbahn des Auswiegeschiebers bzw. an den Ausgabekanal eine Auswiegetrommel anschließt und/oder dass in den Ausgabekanal ein Abgabekanal einer Vorportioniereinrichtung mündet.

Eine praxisgerecht exakt arbeitende Vorrichtung wird erstellt, wenn an einem von dem Antrieb rotierten Hebel ein Antriebshebel angelenkt ist, an dem der kurze Hebel des Kniehebels und ein Kragarm verschwenkbar angelenkt sind, wobei der Kragarm die Auswiegetrommel antreibt.

Bevorzugte Ausführungsformen der Erfindung werden im Folgenden anhand der **Fig. 1** bis **Fig. 4** erläutert.

Es zeigen schematisch
**Fig. 1** eine Auswiegeanordnung mit einem Auswiegeschieber in Ausgangsstellung,
**Fig. 2** eine Auswiegeanordnung mit einem Auswiegeschieber in Endstellung gemäß **Fig. 1****,**
**Fig. 3** eine Auswiegeanordnung in perspektivischer Ansicht und
**Fig. 4** eine Auswiegeanordnung in perspektivischer Ansicht gemäß **Fig.3****.**

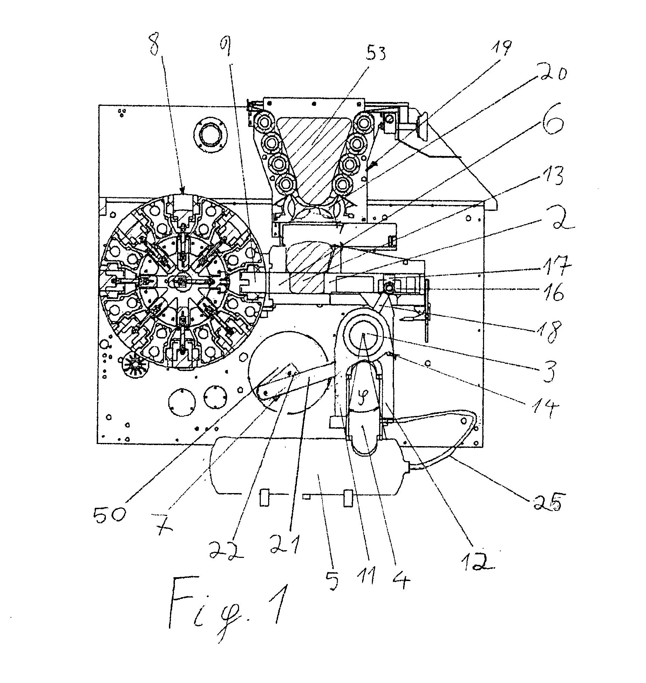

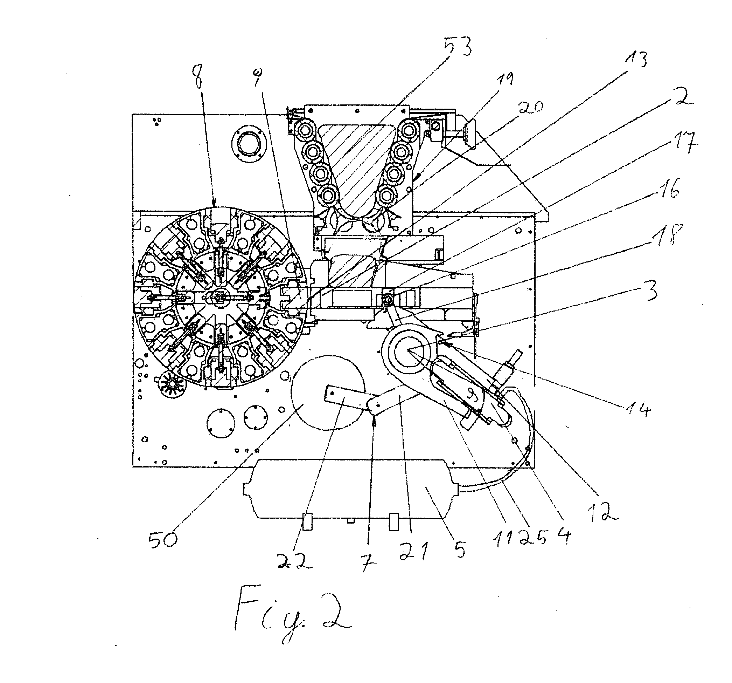

**Fig. 1** und **Fig. 2** zeigen jeweils eine schematische Frontansicht einer erfindungsgemäßen Auswiegeanordnung zum Verschieben von Teigportionen 13 in einer Vorrichtung zum Portionieren und Bearbeiten von Teig. Dabei wird Teig 53 in einer Vorportioniereinrichtung 19 vorportioniert und als Teigportion 13 in einem Ausgabekanal 6 von einem Auswiegeschieber 2 radial in eine Aufnahmeöffnung 9 einer Auswiegetrommel 8 ausgebracht.

Die Auswiegeanordnung umfasst einen ersten Schwenkhebel 11 und einen zweiten Schwenkhebel 12, die um eine Schwenkachse 3 drehbar gelagert sind. Die beiden Schwenkhebel 11 und 12 werden von einem mit einem Antrieb 50 verbundenen Kniehebel 7 um die Schwenkachse 3 geschwenkt. Der Kniehebel 7, der einen kurzen Hebel 22 und einen langen Hebel 21 aufweist, wird durch den Antrieb 50, der den kurzen Hebel 22 verdreht, gestreckt. Der lange Hebel 21 setzt an dem ersten Schwenkhebel 11 an und bewirkt bei Streckung des Kniehebels 7 ein Verschwenken des ersten Schwenkhebels 11 um die Schwenkachse 3.

Zwischen den beiden Schwenkhebeln 11, 12 ist ein Luftbalg 4 als Druckpolster eingesetzt. Die beiden Schwenkhebel 11, 12 liegen dabei an gegenüberliegenden Flächen des Luftbalgs 4 an und sind gegebenenfalls mit dem Luftbalg 4 verbunden. Der Ansatzpunkt des ersten Schwenkhebels 11, der Luftbalg 4 und der zweite Schwenkhebel 12 liegen vorteilhaft in einer senkrecht zur Schwenkachse 3 verlaufenden Ebene. Der erste Schwenkhebel 11 kann, - wie dargestellt- beidseitig vom zweiten Schwenkhebel 12 liegenden Lagerteile 28 und 29 aufweisen bzw. doppelt ausgeführt sein. Der zweite Schwenkhebel 12 liegt zwischen den Lagerteilen 28 und 29. Dadurch ist eine symmetrische Krafteinleitung gegeben und keine Führung gegen Verkippen erforderlich.

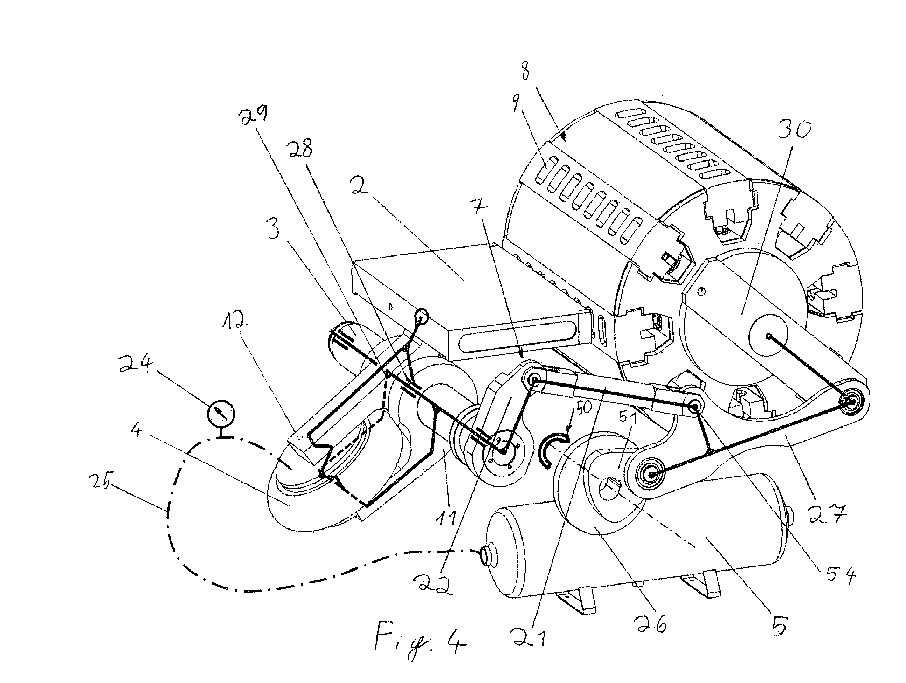

In **Fig. 4** ist der Verlauf des zweiten Lagerteils 29 des ersten Schwenkhebels 11 strichliert angedeutet. Ein Anschlag 14, der als Zapfen auf dem zweiten Schwenkhebel 12 und als Anschlagfläche auf dem ersten Schwenkhebel 11 ausgebildet ist, begrenzt den maximalen Öffnungswinkel ϕ des ersten Schwenkhebels 11 und des zweiten Schwenkhebels 12 zueinander und verhindert gleichzeitig ein Überblähen und Überdehnen des Luftbalgs 4.

Der Luftbalg 4 ist über eine Druckluftleitung 25 mit einem Druckbehälter 5 verbunden. Der Druckbehälter 5 dient als Puffervolumen, damit beim Zusammendrücken des Luftbalgs 4 der Druck nicht zu stark ansteigt. Ziel ist es, eine annähernd konstante Kraft auf den Auswiegeschieber 2 auszuüben. Der Abstand des ersten Schwenkhebels 11 zum zweiten Schwenkhebel 12 und damit der Öffnungswinkel ϕ werden durch den Fülldruck und das Füllvolumen des Luftbalgs 4 mit dem Druckbehälter 5 bestimmt.

An dem zweiten Schwenkhebel 12 ist ein Betätigungsfortsatz 18, der den zweiten Schwenkhebel 12 verlängert, ausgebildet und bewirkt eine Kraftübertragung des zweiten Schwenkhebels 12 auf den Auswiegeschieber 2. Der Betätigungsfortsatz 18 kann als Stange ausgeführt sein und am freien Ende eine Rolle 16 tragen. Die Rolle 16 liegt bei Ausfahren des Auswiegeschiebers 2 an der der Auswiegetrommel 8 abgewandten Fläche und bei Rückstellung des Auswiegeschiebers 2 an der der Auswiegtrommel 8 zugewandten Fläche einer Ausnehmung 17 des Auswiegeschiebers 2 an.

Der Betätigungsfortsatz 18 mit der Rolle 16 bewirkt somit bei Auslenkung des zweiten Schwenkhebels 12 um die Schwenkachse 3 eine Translation des Auswiegeschiebers 2 in dem Ausgabekanal 6 und bewirkt die Umwandlung der Schwenkbewegung der Schwenkhebel 11, 12 um die Schwenkachse 3 in eine Translation des Auswiegeschiebers 2 im Ausgabekanal 6. Der Auswiegeschieber 2 verschiebt dabei die Teigportion 13 in Richtung der Aufnahmeöffnung 9 der Auswiegetrommel 8. Der durch den Luftbalg 4 vorgegebene Abstand und Öffnungswinkel ϕ der beiden Schwenkhebel 11, 12 begrenzt über die Bewegungskopplung des Betätigungsfortsatzes 18 den Ausfahrweg des Auswiegeschiebers 2.

Der Luftbalg 4 ist mit einer Druckluftquelle 5, in dieser Ausführungsform als Druckbehälter mit Kompressor ausgeführt, verbunden, die den Luftbalg 4 mit Druckluft versorgt und als Puffervolumen dient. Eine vorteilhaft in die Druckluftquelle 5 oder Druckleitung 25 integrierte Druckregeleinheit 24 gibt das Füllvolumen und den Fülldruck des Luftbalgs 4, vorzugsweise mit 1 bis 3 bar, einstellbar vor, sodass Fülldruck und Füllvolumen des Luftbalgs 4 für unterschiedliche Teigmengen und unterschiedliche Teige einstellbar sind.

**Fig. 2** zeigt eine Auswiegeanordnung in Frontansicht mit dem ersten Schwenkhebel 11 und dem zweiten Schwenkhebel 12 in ausgelenktem Zustand. Der Auswiegeschieber 2 ist in ausgefahrenem Zustand, dargestellt. Die Auslenkung wird durch den vom Antrieb 50 angetriebenen Kniehebel 7 bewirkt. Der Druck und das Füllvolumen des nunmehr etwas komprimierten Luftbalgs 4 bestimmen den Öffnungswinkel ϕ der beiden Schwenkhebel 11, 12 und damit die Verstellkraft des Auswiegeschiebers 2. Die dargestellte Teigportion 13 wurde durch den Auswiegeschieber 2 in Richtung der Aufnahmeöffnung 9 der Auswiegetrommel 8 verschoben, wobei der im Luftbalg 4 eingestellte Druck die Einpresskraft der Teigportion 13 in die Aufnahmeöffnung 9 der Auswiegetrommel 8 vorgibt.

In **Fig. 1** und **Fig. 2** sind die wesentlichen weiteren Elemente einer Vorrichtung zum Portionieren und Bearbeiten von Teig dargestellt. Eine Vorportioniereinrichtung 19 umfasst Sternmesser 20 zum Vorportionieren des Teiges 53. Der vorportionierte Teig fällt dabei in den Ausgabekanal 6 und wird als Teigportion 13 vom Auswiegeschieber 2 ausgebracht. Die Auswiegetrommel 8 umfasst eine Mehrzahl von Aufnahmeöffnungen 9 und Verstellelemente zur Aufnahme, Bearbeitung und Weiterbeförderung der Teigportionen 13.

In Ausgangsstellung entsprechend **Fig. 1** ist der Luftbalg 4 unkomprimiert und der erste Schwenkhebel 11 vom Antrieb 50 durch den Kniehebel 7 in Ausgangsstellung verstellt. Der Anschlag 14 verhindert eine weitere Öffnung über einen maximalen Öffnungswinkel ϕ hinaus und dient gleichzeitig der Mitnahme des zweiten Schwenkhebels 12 in die Ausgangstellung und verhindert eine Überblähung des unter Druck stehenden Luftbalgs 4. Durch Streckung des Kniehebels 7 durch den Antrieb 50 wird der erste Schwenkhebel 11 ausgelenkt und überträgt die Schwenkbewegung als Druckkraft über den Luftbalg 4 an den zweiten Schwenkhebel 12. Der unter Druck stehende Luftbalg 4 wird komprimiert **(****Fig. 2****),** wobei der Druckbehälter 5 als Puffervolumen dient und einen zu starken Druckanstieg im Luftbalg 4 verhindert. Der Luftbalg 4 lenkt den zweiten Schwenkhebel 12 um die Schwenkachse 3 aus und durch die Bewegungskopplung des zweiten Schwenkhebels 12 mit dem Auswiegeschieber 2 bewirkt die Auslenkung ein Ausfahren des Auswiegeschiebers 2 in Richtung der Auswiegetrommel 8.

Alternativ zum Druckbehälter 5 kann der Luftbalg 4 an eine mit einem Kompressor verbundene Druckluftleitung 25 angeschlossen und die Druckregeleinheit 24 zwischen Kompressor und Luftbalg 4 angeordnet werden.

Alternativ zur Schwenkachse 3 kann der erste Schwenkhebel 11 auch auf einer Welle befestigt sein, die mit dem ersten Schwenkhebel 11 durch den Kniehebel 7 geschwenkt bzw. verdreht wird. Dabei wird der zweite Schwenkhebel 12 auf dieser Welle verschwenkbar gelagert.

Es ist auch möglich, die beiden Schwenkhebel 11, 12 auf nebeneinander liegenden, parallelen Achsen oder Wellen zu lagern und zwischen ihnen einen Luftbalg 4 anzuordnen.

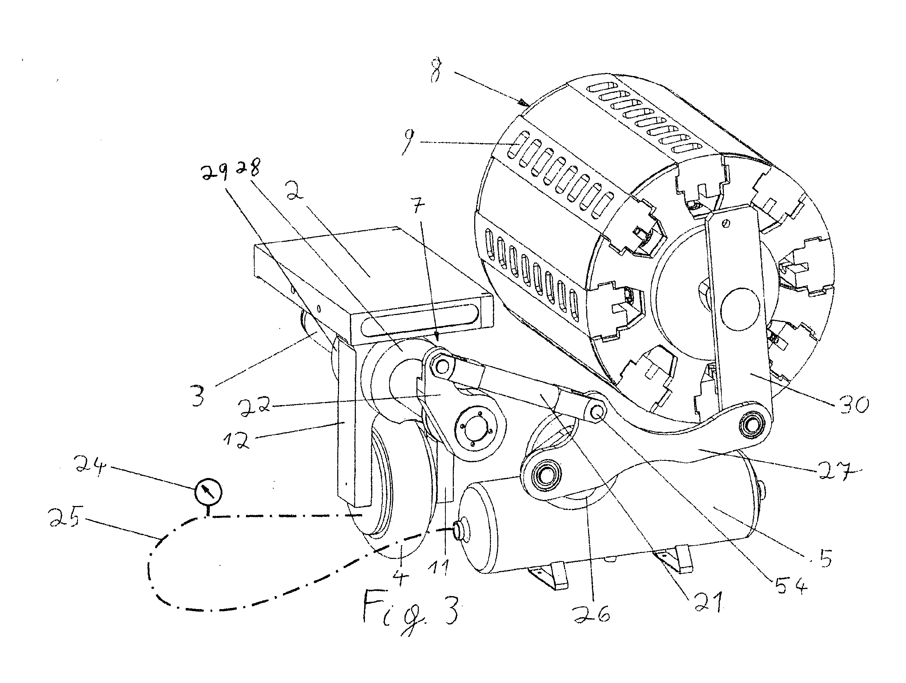

**Fig. 3** und **Fig. 4** zeigen jeweils eine perspektivische Ansicht einer weiteren Ausführungsform einer erfindungsgemäßen Auswiegeanordnung zum Verschieben von Teigportionen in einer Vorrichtung zum Portionieren und Bearbeiten von Teig.

**Fig. 3** zeigt einen vom in Fig. 4 durch einen umlaufenden Pfeil angedeuteten Antrieb 50 über einen Antriebshebel bzw. Flansch 26 mit einem an einem exzentrischen Drehgelenkt verschwenkbar befestigten Antriebshebel 27, der einerseits an einem Kragarm 30 der Auswiegetrommel 8 ansetzt und außermittig einen Ansatz mit einem Schwenklager 54 für einen kurzen Hebel 22 aufweist. Der Hebel 22 verbindet den Antriebshebel 27 mit einem exzentrischen Fortsatz bzw. langen Hebel 21 einer als Welle 3 ausgebildeten Schwenkachse und ist am Antriebshebel 27 und dem langen Hebel 21 schwenkbar gelagert. Die Hebel 21 und 22 bilden den Kniehebel 7.

Der erste Schwenkhebel 11 ist auf der Welle 3 starr befestigt und setzt am Luftbalg 4 an und ist vorteilhaft mit diesem verbunden. Gegenüber dem ersten Schwenkhebel 11 setzt am Luftbalg 4 der zweite Schwenkhebel 12 an, ist vorteilhafterweise ebenfalls mit dem Luftbalg 4 verbunden und auf der Welle 3 drehbar gelagert. Der zweite Schwenkhebel 12 ist wie bei der in **Fig. 1** und **2** beschriebenen Ausführungsform über einen Betätigungsfortsatz 18 und eine Rolle 16 mit dem Auswiegeschieber 2 verbunden. Die dargestellte Auswiegetrommel 8 besitzt mehrere parallel zueinander liegende, gleichmäßig längs des Umfanges der Auswiegtrommel 8 angeordnete Aufnahmeöffnungen 9. Der Luftbalg 4 ist durch die Druckleitung 25 mit einem Druckbehälter 5 verbunden.

**Fig. 4** zeigt eine perspektivische Ansicht der erfindungsgemäßen Auswiegeanordnung gemäß **Fig. 3** in ausgelenktem Zustand, wobei der Auswiegeschieber 2 in vorderer, ausgefahrener Position steht. Weiters zeigt **Fig. 4** die Kraftkopplung und den Kraftfluss des nur angedeuteten Antriebs 50 an die Auswiegeanordnung und die Auswiegetrommel 8.

Bei Verdrehung des Flansches 26 um seine Drehachse wird über den Antriebshebel 27 der Krag- bzw. Antriebsarm 30 und damit die Auswiegetrommel 8 um ihre Drehachse verdreht. Der dabei geschwenkte Antriebshebel 27 zieht dabei den über den außermittigen Ansatz 54 verschwenkbar verbundenen Betätigungshebel bzw. kurzen Hebel 22 mit sich. Der Hebel 22 verdreht in Folge den exzentrischen Fortsatz bzw. langen Hebel 21 und verdreht damit die Welle 3 um ihre Drehachse. Der an der Welle 3 befestigte erste Schwenkhebel 11 wird ausgeschwenkt und druckbeaufschlagt den mit ihm verbunden Luftbalg 4. Durch den Innendruck und das Füllvolumen des Luftbalgs 4 wird die Bewegung an den, vorteilhaft mit ihm verbundenen, zweiten Schwenkhebel 12 übertragen und der zweite Schwenkhebel 12 um die Drehachse der Welle 3 ausgeschwenkt. Der Auswiegeschieber 2 wird dadurch in die vordere Position ausgefahren und drückt die Teigportionen 13 mit einer durch den Luftbalg 4 bestimmten Einpresskraft in die Aufnahmeöffnungen 9 der Auswiegetrommel 8 ein.

## Patentansprüche

1. Auswiegeanordnung zum Transport bzw. Verschieben von Teigportionen mit einem Auswiegeschieber (2) in einer Vorrichtung zum Portionieren und Bearbeiten von Teig, wobei die Anordnung einen verdrehbar, insbesondere verschwenkbar, gelagerten ersten Schwenkhebel (11) und einen verdrehbar, insbesondere verschwenkbar, gelagerten zweiten Schwenkhebel (12) aufweist, wobei der zweite Schwenkhebel (12) einen Betätigungsfortsatz (18) zur Hin- und Herbewegung des Auswiegeschiebers (2) trägt und der erste Schwenkhebel (11) von einem Antrieb um sein Schwenklager verschwenkbar ist, wobei
zwischen dem ersten Schwenkhebel (11) und dem zweiten Schwenkhebel (12) ein Luftbalg (4) angeordnet ist, dessen Volumen und/oder Form durch Druckluftbeaufschlagung veränderlich ist und den Abstand zwischen den einander gegenüberliegenden Hebelarmen der beiden Schwenkhebel (11, 12) vorgibt.

2. Auswiegeanordnung nach Anspruch 1, **dadurch gekennzeichnet, dass** der erste Schwenkhebel (11) und der zweite Schwenkhebel (12) gegen den Luftbalg (4) anlegbar sind oder zumindest ein Schwenkhebel (11, 12) mit dem Luftbalg (4) verbunden ist.

3. Auswiegeanordnung nach Anspruch 1 oder 2, **dadurch gekennzeichnet, dass** der Luftbalg (4) mit einer Druckluftquelle (5), vorzugsweise einem Druckbehälter oder Kompressor, verbunden ist und/oder der Luftbalg (4) mit einer Druckluftquelle (5), vorzugsweise einem als Puffervolumen ausgebildeten Druckbehälter, verbunden ist und/oder der Luftbalg (4) und/oder die Druckluftquelle (5) eine Druckregeleinheit (24) zur Einstellung des Druckes im Luftbalg (4) und demzufolge des Volumens und/oder der Form des Luftbalges (4) aufweisen.

4. Auswiegeanordnung nach einem der Ansprüche 1 bis 3 **dadurch gekennzeichnet, dass** der erste Schwenkhebel (11) und der zweite Schwenkhebel (12) auf zueinander parallelen Schwenkachsen (3) verschwenkbar gelagert sind oder dass der erste Schwenkhebel (11) und der zweite Schwenkhebel (12) auf derselben Schwenkachse (3) relativ zueinander verschwenkbar gelagert sind.

5. Auswiegeanordnung nach einem der Ansprüche 1 bis 4, **dadurch gekennzeichnet, dass** zur Verdrehung des ersten Schwenkhebels (11) ein Antrieb (50) und ein Kniehebel (7) vorgesehen ist, wobei der Antrieb (50) einen kurzen Hebel (22) antreibt, der mit einem langen Hebel (21) den Kniehebel (7) ausbildet, wobei das Ende des langen Hebels (21) mit dem ersten Schwenkhebel (11) verbunden ist.

6. Auswiegeanordnung nach einem der Ansprüche 1 bis 5, **dadurch gekennzeichnet, dass** der Luftbalg (4) zumindest teilweise in der Bewegungsbahn bzw. -ebene der beiden Schwenkhebel (11, 12) angeordnet ist.

7. Auswiegeanordnung nach einem der Ansprüche 1 bis 6, **dadurch gekennzeichnet, dass** der erste Schwenkhebel (11) zwei Lagerteile (28, 29), aufweist, mit denen er auf der Schwenkachse (3) gelagert ist und zwischen denen der zweite Schwenkhebel (12) auf der Schwenkachse (3) gelagert ist.

8. Auswiegeanordnung nach einem der Ansprüche 1 bis 7, **dadurch gekennzeichnet, dass** die Länge des mit dem Luftbalg (4) in Kontakt stehenden Hebelarmes des zweiten Schwenkhebels (12) größer ist als die Länge des Betätigungsfortsatzes (18), vorzugsweise das Zwei- bis Vierfache der Länge des Betätigungsfortsatzes (18) beträgt.

9. Auswiegeanordnung nach einem der Ansprüche 1 bis 8, **dadurch gekennzeichnet, dass** der Fülldruck und das Füllvolumen des Luftbalgs (4) den Öffnungswinkel (ϕ) zwischen dem ersten Schwenkhebel (11) und dem zweiten Schwenkhebel (12) definieren und/oder der Öffnungswinkel (ϕ) zwischen den Schwenkhebeln (11, 12) über den Druck im Luftbalg (4) einstellbar und vorgegeben ist.

10. Auswiegeanordnung nach einem der Ansprüche 1 bis 9, **dadurch gekennzeichnet, dass** bei Verschwenken des ersten Schwenkhebels (11) durch den Kniehebel (7) der Luftbalg (4) druckbeaufschlagbar und der zweite Schwenkhebel (12) durch den Luftbalg (4) um die Schwenkachse (3) auslenkbar ist, sodass der mit dem zweiten Schwenkhebel (12) gekoppelte Auswiegeschieber (2) bei einem Verschwenken des ersten Schwenkhebels (11) entlang eines Ausgabekanals (6) verschiebbar ist.

11. Auswiegeanordnung nach einem der Ansprüche 1 bis 10, **dadurch gekennzeichnet, dass** der Luftbalg (4) den Öffnungswinkel (ϕ) zwischen den Schwenkhebeln (11,12) und die Verdrehung des zweiten Schwenkhebels (12) bestimmt und die Länge des Ausfahrweges des Auswiegeschiebers (2), und gegebenenfalls den Einpressdruck einer Teigportion (13) in eine radiale Aufnahmeöffnung (9) einer Auswiegetrommel (8), vorgibt.

12. Auswiegeanordnung nach einem der Ansprüche 1 bis 11, **dadurch gekennzeichnet, dass** der Auswiegeschieber (2) eine Ausnehmung (17) aufweist, in die der zweite Schwenkhebel (12), vorzugsweise mit einer am freien Ende des Betätigungsfortsatzes (18) drehbar gelagerten Rolle (16), eingreift und oder ein Anschlag (14), zur Begrenzung des Öffnungswinkels (ϕ) und der Verhinderung der Überdehnung des Luftbalgs (4) vorgesehen ist, der einen Zapfen und eine damit zusammenwirkende Anschlagfläche aufweist, wobei gegebenenfalls die Anschlagfläche des Anschlags (14) an dem ersten Schwenkhebel (11) und der Zapfen an dem zweiten Schwenkhebel (12) ausgebildet ist.

13. Vorrichtung zum Portionieren und Bearbeiten von Teig, enthaltend einen Auswiegeanordnung nach einem der vorangehenden Ansprüche 1 bis 12.

14. Vorrichtung nach Anspruch 13, **dadurch gekennzeichnet, dass** die Vorrichtung einen Antrieb (50) zur Betätigung des ersten Schwenkhebels (11) aufweist, wobei gegebenenfalls an einem von dem Antrieb (50) rotierten Hebel (51) ein Antriebshebel (27) angelenkt ist, an dem der kurze Hebel (22) des Kniehebels (7) und ein Kragarm (30) verschwenkbar angelenkt sind, wobei der Kragarm (30) die Auswiegetrommel (8) antreibt.

15. Vorrichtung nach Anspruch 13 oder 14, **dadurch gekennzeichnet, dass** an die Ausgangsbahn des Auswiegeschiebers (2) bzw. an den Ausgabekanal (6) eine Auswiegetrommel (8) anschließt und/oder in den Ausgabekanal (6) ein Abgabekanal einer Vorportioniereinrichtung (19) mündet.

## Claims

1. Weighing-out arrangement for conveying or moving dough portions with a weighing-out slide (2) in a device for portioning and processing dough, wherein the arrangement comprises a rotatably, in particular pivotably, mounted first pivot lever (11) and a rotatably, in particular pivotably, mounted second pivot lever (12), wherein the said second pivot lever (12) carries an actuating extension (18) for back and forth movement of the weighing-out slide (2), and wherein the first pivot lever (11) can be pivoted by a drive about its pivot bearing, wherein pneumatic bellows (4) are arranged between the first pivot lever (11) and the second pivot lever (12), whose volume and/or shape is variable by the application of compressed air, in order to set the distance between the opposing lever arms of the two pivot levers (11, 12).

2. Weighing-out arrangement according to claim 1, **characterised in that** the first pivot lever (11) and the second pivot lever (12) can be applied against the bellows (4), or at least one pivot lever (11, 12) is connected to the air bellows (4).

3. Weighing-out arrangement according to claim 1 or 2, **characterised in that** the air bellows (4) are connected with a compressed air source (5), preferably a pressurised vessel or compressor, and/or the air bellows (4) are connected with a compressed air source (5), preferably a pressure vessel formed as a buffer volume, and/or the air bellows (4) and/or the compressed air source (5) have a pressure control unit (24) to adjust the pressure in the air bellows (4) and, as a result, the volume and/or shape of the air bellows (4).

4. Weighing-out arrangement according to one of the claims 1 to 3 **characterised in that** the first pivot lever (11) and the second pivot lever (12) are mounted pivotably on mutually parallel pivot axes (3), or **in that** the first pivot lever (11) and the second pivot lever (12) are each pivotably mounted relative to the same pivot axis (3).

5. Weighing-out arrangement according to any one of the claims 1 to 4, **characterised in that** a drive (50) and a toggle lever (7) are provided for rotation of the first pivot lever (11), wherein the drive (50) drives a short lever (22) to form the toggle lever (7) with a long lever (21), wherein the end of the long lever (21) is connected to the first pivot lever (11).

6. Weighing-out arrangement according to any one of the claims 1 to 5, **characterised in that** the bellows (4) is arranged at least partially in the path or plane of the two pivot levers (11, 12).

7. Weighing-out arrangement according to any one of the claims 1 to 6, **characterised in that** the first pivot lever (11) has two bearing parts (28, 29), with which it is mounted on the pivot axis (3) and between which the second pivot lever (12) is mounted on the pivot axis (3).

8. Weighing-out arrangement according to one of the claims 1 to 7, **characterised in that** the length of the lever arm of the second pivoting lever (12) in contact with the air bellows (4) is greater than the length of the actuating extension (18), preferably two to four times the length of the actuating extension (18).

9. Weighing-out arrangement according to one of the claims 1 to 8, **characterised in that** the filling pressure and the filling volume of the air bellows (4) define the opening angle (ϕ) between the first pivot lever (11) and the second pivot lever (12), and/or the opening angle (ϕ) between the pivot levers (11, 12) is adjustable and preset via the pressure in the air bellows (4).

10. Weighing-out arrangement according to any one of the claims 1 to 9, **characterised in that** pivoting of the first pivoted lever (11) by the toggle lever (7) causes the air bellows (4) to be acted upon by pressure, while the second pivot lever (12) can be deflected about the pivot axis (3) by the said air bellows (4) so that the weighing-out slide (2) coupled to the said second pivot lever (12) is displaceable along an output channel (6) upon pivoting of the first pivoted lever (11).

11. Weighing-out arrangement according to any one of the claims 1 to 10, **characterised in that** the bellows (4) determine the opening angle (ϕ) between the pivot levers (11, 12) and the rotation of the second pivot lever (12), and predetermines the length of the travel path of the weighing-out slide (2), and, optionally, the pressing force on a dough portion (13) in a radial receptacle opening (9) of a weighing-out drum (8).

12. Weighing-out arrangement according to any one of the claims 1 to 11, **characterised in that** the weighing-out slide (2) has a recess (17), in which the second pivoting lever (12), preferably with a roller (16) rotatably mounted at the free end of the actuating extension (18), engages, and/or a stop (14) to limit the opening angle (ϕ) and to prevent over-expansion of the air bellows (4) and which has a pin and an interacting stop surface, wherein, optionally, the stop surface of the stop (14) is formed on the first pivot lever (11) and the pin on the second pivoting lever (12).

13. Device for portioning and processing dough comprising a weighing-out arrangement according to any one of the preceding claims 1 to 12.

14. Device according to claim 13, **characterised in that** the device comprises a drive (50) to actuate the first pivot lever (11), wherein, optionally, a drive lever (27) is linked to a lever (51) rotated by the drive (50), and to which the short levers (22) of the toggle lever (7) and a cantilever (30) are pivotably linked, wherein the cantilever arm (30) drives the weighing-out drum (8).

15. Device according to claim 13 or 14, **characterised in that** a weighing-out drum (8) is connected to the output path of the weighing-out slide (2) or to the output channel (6) and/or that the output channel (6) opens into a delivery channel of a pre-portioning device (19).

## Revendications

1. Système de pesée pour le transport ou le déplacement de portions de pâte avec un tiroir de pesée (2) dans un dispositif destiné au portionnement et au traitement de la pâte, ledit système comportant un premier levier pivotant (11), monté rotatif, en particulier pivotant, et un deuxième levier pivotant (12) monté rotatif, en particulier pivotant, ledit deuxième levier pivotant (12) portant une saillie d'actionnement (18) pour le déplacement en va-et-vient du tiroir de pesée (2) et ledit premier levier pivotant (11) étant apte à pivoter autour de son palier de pivotement au moyen d'un système d'entraînement,
entre le premier levier pivotant (11) et le deuxième levier pivotant (12) étant disposé un soufflet pneumatique (4), dont le volume et/ou la forme sont modifiables sous l'effet d'une sollicitation d'air comprimé et définissent la distance entre les bras de levier opposés des deux leviers pivotants (11, 12).

2. Système de pesée selon la revendication 1, **caractérisé en ce que** le premier levier pivotant (11) et le deuxième levier pivotant (12) peuvent être mis en appui contre le soufflet pneumatique (4), ou au moins un levier pivotant (11, 12) est relié au soufflet pneumatique (4).

3. Système de pesée selon la revendication 1 ou 2, **caractérisé en ce que** le soufflet pneumatique (4) est relié à une source d'air comprimé (5), de préférence un réservoir sous pression ou un compresseur, et/ou le soufflet pneumatique (4) est relié à une source d'air comprimé (5), de préférence un réservoir sous pression réalisé sous forme de volume tampon, et/ou le soufflet pneumatique (4) et/ou la source d'air comprimé (5) comportent une unité de réglage de la pression (24) pour régler la pression dans le soufflet pneumatique (4) et, par conséquent, le volume et/ou la forme du soufflet pneumatique (4).

4. Système de pesée selon l'une quelconque des revendications 1 à 3, **caractérisé en ce que** le premier levier pivotant (11) et le deuxième levier pivotant (12) sont montés pivotant sur des axes de pivotement (3) parallèles entre eux, ou **en ce que** le premier levier pivotant (11) et le deuxième levier pivotant (12) sont montés pivotant l'un par rapport à l'autre sur le même axe de pivotement (3).

5. Système de pesée selon l'une quelconque des revendications 1 à 4, **caractérisé en ce qu'**un système d'entraînement (50) et un levier à genouillère (7) sont prévus pour la rotation du premier levier pivotant (11), ledit système d'entraînement (50) actionnant un levier (22) court qui, conjointement avec un levier (21) long forme le levier à genouillère (7), l'extrémité du levier (21) long étant reliée au premier levier pivotant (11).

6. Système de pesée selon l'une quelconque des revendications 1 à 5, **caractérisé en ce que** le soufflet pneumatique (4) est disposé en moins partiellement dans la trajectoire de déplacement ou le plan de déplacement des leviers pivotants (11, 12).

7. Système de pesée selon l'une quelconque des revendications 1 à 6, **caractérisé en ce que** le premier levier pivotant (11) comporte deux parties de palier (28, 29), par lesquelles il est monté sur l'axe de pivotement (3) et entre lesquelles le deuxième levier pivotant (12) est monté sur l'axe de pivotement (3).

8. Système de pesée selon l'une quelconque des revendications 1 à 7, **caractérisé en ce que** la longueur du bras de levier, en contact avec le soufflet pneumatique (4), du deuxième levier pivotant (12) est supérieure à la longueur de la saillie d'actionnement (18), de préférence, elle est de l'ordre du double au quadruple de la longueur de la saillie d'actionnement (18).

9. Système de pesée selon l'une quelconque des revendications 1 à 8, **caractérisé en ce que** la pression de remplissage et le volume de remplissage du soufflet pneumatique (4) définissent l'angle d'ouverture (ϕ) entre le premier levier pivotant (11) et le deuxième levier pivotant (12), et/ou l'angle d'ouverture (ϕ) entre les leviers pivotants (11, 12) est réglable et est fixé par la pression dans le soufflet pneumatique (4).

10. Système de pesée selon l'une quelconque des revendications 1 à 9, **caractérisé en ce que** pendant le pivotement du premier levier pivotant (11) au moyen du levier à genouillère (7), le soufflet pneumatique (4) peut être sollicité en pression et le deuxième levier pivotant (12) peut être dévié autour de l'axe de pivotement (3) au moyen du soufflet pneumatique (4), de telle sorte que le tiroir de pesée (2), couplé au deuxième levier pivotant (12), peut être déplacé le long d'un canal de distribution (6) pendant un pivotement du premier levier pivotant (11).

11. Système de pesée selon l'une quelconque des revendications 1 à 10, **caractérisé en ce que** le soufflet pneumatique (4) détermine l'angle d'ouverture (ϕ) entre les leviers pivotants (11, 12) et la rotation du deuxième levier pivotant (12) et fixe la longueur de la trajectoire de déplacement du tiroir de pesée (2) et, le cas échéant, la pression d'enfoncement d'une portion de pâte (13) dans un ouverture de réception (9) radiale d'un tambour de pesée (8).

12. Système de pesée selon l'une quelconque des revendications 1 à 11, **caractérisé en ce que** le tiroir de pesée (2) comporte un évidement (17), dans lequel s'engage le deuxième levier pivotant (12), de préférence avec un rouleau (16) monté rotatif sur l'extrémité libre de la saillie d'actionnement (18), et/ou il est prévu une butée (14), qui est destinée à limiter l'angle d'ouverture (ϕ) et à empêcher une dilatation excessive du soufflet pneumatique (4) et qui comporte un téton et une surface de butée coopérant avec celui-ci, le cas échéant, ladite surface de butée de la butée (14) étant réalisée sur le premier levier pivotant (11) et le téton étant réalisé sur le deuxième levier pivotant (12).

13. Dispositif permettant le portionnement et le traitement d'une pâte, contenant un système de pesée selon l'une quelconque des revendications 1 à 12.

14. Dispositif selon la revendication 13, **caractérisé en ce que** le dispositif comporte un système d'entraînement (50) destiné à actionner le premier levier pivotant (11), le cas échéant, un levier d'entraînement (27) étant articulé sur un levier (51) entraîné en rotation par le système d'entraînement (50), le levier (22) court du levier à genouillère (7) et un bras en porte-à-faux (30) sont articulés de manière pivotante sur ledit levier d'entraînement (27), le bras en porte-à-faux (30) actionnant le tambour de pesée (8).

15. Dispositif selon la revendication 13 ou 14, **caractérisé en ce qu'**un tambour de pesée (8) est disposé dans le prolongement de la trajectoire de sortie du tiroir de pesée (2) ou du canal de distribution (6), et/ou un canal de décharge d'un dispositif de pré-portionnement (19) débouche dans le canal de distribution (6).
